# EUROPÄISCHE PATENTSCHRIFT

(11) **EP 2 082 905 B1**
(45) Veröffentlichungstag und Bekanntmachung des Hinweises auf die Patenterteilung: **23.03.2011**
(21) Anmeldenummer: 08290064.8
(22) Anmeldetag: 24.01.2008
(51) Int. Cl.: B60H 1/00

(54) **Vorrichtung zur Scheibenenteisung**
Device for windscreen deicing
Dispositif de dégivrage d'un pare-brise

(43) Veröffentlichungstag der Anmeldung: 29.07.2009
(73) Patentinhaber: Behr France Rouffach SAS, 68250 Rouffach (FR)
(72) Erfinder: Denny, Geoffrey, 68170 Rixheim (FR)
(74) Vertreter: Grauel, Andreas

(56) Entgegenhaltungen:
- DE-A1- 1 630 284
- GB-A- 2 029 337
- US-A- 1 932 798
- US-A- 3 747 500

## Beschreibung

Die Erfindung betrifft eine Vorrichtung zur Scheibenenteisung, die insbesondere durch einen Teil eines Fahrzeug-Belüftungssystems gebildet ist, gemäß dem Oberbegriff des Anspruches 1.

Zur Enteisung von Windschutzscheiben sind im Frontbereich üblicherweise Defrost-Düsen am innenraumseitigen Ende der Windschutzscheibe angeordnet. Durch diese Düsen wird im Bedarfsfall von einem motorkühlmittelbeheizten Heizer oder gegebenenfalls auch einem elektrisch betriebenen Heizer, wie bspw. einem durch PTC-Elemente gebildeten Heizer, warme Luft mit maximaler Gebläseleistung dem Fahrzeuginnenraum zugeführt. Bis ein auf der Außenseite der Windschutzscheibe liegender Relf-, Eis- oder Schneebelag entfernt ist, dauert es jedoch relativ lang.

Die US 2004/0134995 A1 schlägt vor, warme Luft aus einem im Frontbereich angeordneten Motorraum unter Einbeziehung des heißen Kühlers oder von Widerstandswärme, die bei Betrieb eines im Motorraum elektrisch betätigten Lüfters In der Spule anfällt, zur Enteisung der Windschutzscheibe zu verwenden.

Aus der EP 0 288 770 B1 ist ein Kraftfahrzeug mit unterhalb der Windschutzscheibe angeordneten Lufteintrittsöffnungen zur Frischluftzufuhr in den Fahrzeuginnenraum bekannt, die von einem Grill abgedeckt sind, und mit Scheibenwischern, die in ihrer Ruhestellung oberhalb der Lufteintrittsöffnungen liegen, wobei im Grill der Lufteintrittsöffnungen ein Wärmetauscher angeordnet ist. Der Wärmetauscher kann an den Kühlkreislauf der Brennkraftmaschine angeschlossen sein. Eine derartige Anordnung ermöglicht ein schnelles Entfernen von Eis und Schnee im Bereich der Scheibenwischer.

Ferner schlägt die DE 297 08 019 U1 vor, dass ein Gebläse eines Belüftungssystems in seiner Drehrichtung umgekehrt wind, so dass über die außenseitig unterhalb der Windschutzscheibe angeordneten Ansaugöffnungen für Frischluft warme Luft aus dem Fahrzeuginnenraum nach außen geblasen wird. Zusätzlich wird vorgeschlagen, dass ein weiteres Gebläse warme Luft aus dem Motorraum von außen her auf die Windschutzscheibe bläst, um ein schnelles Enteisen zu ermöglichen.

Die DE 1 630 284 offenbart eine Vorrichtung nach dem Oberbegriff des Anspruchs 1.

Es ist Aufgabe der Erfindung, eine verbesserte Vorrichtung zur Scheibenenteisung zur Verfügung zu stellen.

Diese Aufgabe wird gelöst durch eine Vorrichtung mit den Merkmalen des Anspruches 1. Vorteilhafte Ausgestaltungen sind Gegenstand der Unteransprüche.

Erfindungsgemäß ist eine Vorrichtung zur Scheibenenteisung, Insbesondere Windschutzscheibenenteisung, für ein Fahrzeug mit einem Fahrzeuginnenraum und einer Außenseite des Fahrzeugs vorgesehen, aufweisend ein Gebläse mit mindestens einem Ansaugluftkanal über den Luft von der Außenseite des Fahrzeugs ansaugbar ist, mindestens einen Heizer, welcher zur Erwärmung der dem Fahrzeuginnenraum zuzuführenden Luft dient, und mindestens einem inneren Defrost-Luftkanal, durch welchen vom Gebläse angesaugte Luft innenraumseitig in Richtung Scheibe blasbar ist, wobei neben dem Ansaugluftkanal des Gebläses und dem inneren Defrost-Luftkanal, der innenraumseitig und in der Nähe einer Seite der Scheibe endet, ein äußerer Defrost-Luftkanal vorgesehen ist, der auf der Außenseite des Fahrzeugs in der Nähe einer Seite der Scheibe endet. Das vorsehen eines äußeren Defrost-Luftkanals, der zumindest bereichsweise, besonders bevorzugt vollständig, getrennt vom inneren Defrost-Luftkanal ausgebildet ist, ermöglicht ein schnelles Entfernen eines außen auf einer Scheibe liegenden Belags, wie Eis, Schnee oder Reif. Der äußere Defrost-Luftkanal geht hierbei bevorzugt direkt von einem Mischraum eines Belüftungs- und Klimatisierungssystems aus. Das Belüftungs- und Klimatisierungssystem muss vorliegend nicht notwendigerweise einen Verdampfer enthalten oder eine Kühlfunktion aufweisen, jedoch ist das Vorsehen eines Verdampfers bevorzugt, um der Luft möglichst viel Feuchtigkeit zu entziehen, welche sich in kalten Bereichen der Scheibe wieder ablagern könnte.

Erfindungsgemäß ist ein Abzweig des äußeren Defrost-Luftkanals vorgesehen, der luftanströmseitig und/oder luftabströmseitig des Gebläses in den Luftkanal einmündet, über welchen Luft dem temperierenden Bereich des Belüftungs- und Klimatisierungssystems zuführbar Ist. Da in diesem Bereich in der Regel mindestens ein Filter vorgesehen ist, welches bei geringen Außentemperaturen vereist sein kann, ist durch die direkte Rückführung der warmen Luft in Richtung Belüftungs- und Klimatisierungssystem neben der Enteisung der Scheibe von außen auch eine Enteisung des Filters möglich, so dass schnell von außen Luft angesaugt werden kann, welche bei den entsprechenden Außentemperaturen in der Regel weniger Feuchtigkeit enthält, als die im Fahrzeuginnenraum enthaltene Luft, so dass ein weiterer Beschlag der Scheibe von außen und innen durch die vom Gebläse kommende Luft im Wesentlichen vermieden werden kann.

Bevorzugt ist neben einem als Kühler für ein Kühlmittel, insbesondere das Motorkühlmittel, dienenden Heizer mindestens ein elektrischer Heizer vorgesehen ist. Der elektrische Heizer kann in Reihe mit dem anderen Heizer angeordnet sein. Zusätzlich oder alternativ kann ein Defrost-Heizer direkt in dem äußeren Defrost-Luftkanal angeordnet sein.

Um ausreichend Wärme zum Enteisen der Windschutzscheibe erzeugen zu können, sollte ein elektrischer Heizer, der insbesondere bevorzugt durch ein oder mehrere PTC-Elemente gebildet wird, und der als elektrischer Heizer des Belüftungs- und Klimatisierungssystems oder als zusätzlicher Defrost-Heizer vorgesehen sein kann, eine ausreichende Leistung haben, bevorzugt mindestens 3000 W. Hierfür ist es hilfreich, wenn eine Spannungsversorgung im Fahrzeug mit 42 V oder mehr vorgesehen ist.

Insbesondere bevorzugt enden der innere Defrost-Luftkanal und der äußere Defrost-Luftkanal auf der gleichen Seite der Scheibe, in der Regel in normaler Fahrtrichtung des Fahrzeugs gesehen am in Fahrtrichtung vom liegenden, unteren Ende der Windschutzscheibe. Hierbei ist bevorzugt mindestens eine Austrittsöffnung des äußeren Defrost-Luftkanals zwischen der Scheibe und einer Eintrittsöffnung für die Frischluftansaugung des Gebläses angeordnet.

Im Folgenden wird die Erfindung anhand mehrerer Ausführungsbeispiele unter Bezugnahme auf die Zeichnung im Einzelnen erläutert. Es zeigen:
- Fig. 1: eine schematische Schnittdarstellung durch den Frontbe- reich eines Kraftfahrzeugs mit einer nicht erfindungsgemäßen Vorrichtung zur Scheibenenteisung,

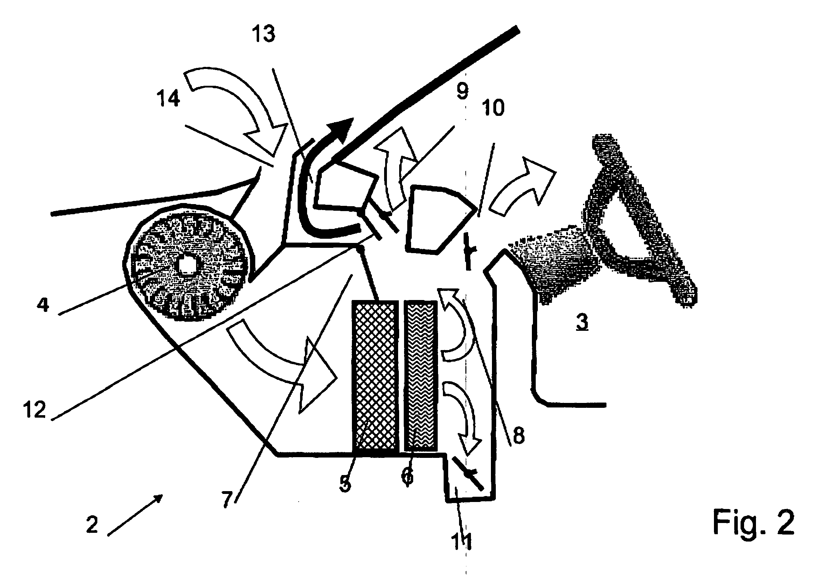

- Fig. 2: eine ausschnittsweise vergrößerte Ansicht von Fig. 1,
- Fig. 3: eine schematische Schnittdarstellung eines Teils eines Fahrzeugs mit einer Vorrichtung zur Scheibenenteisung gemäß einer Variante der ersten Vorrichtung aus Fig.1,
- Fig. 4: eine schematische Schnittdarstellun eines Teils eines Fahrzeugs mit einer zweiten nicht erfindungsgemäßen Vorrichtung zur cheibenenteisung,
- Fig. 5: eine schematische Schnittdarstellung eines Teils eines Fahrzeugs mit einer Vorrichtung zur Scheibenenteisung gemäß einem ersten Ausführungsbeispiel, und
- Fig. 6: eine schematische Schnittdarstellung eines Teils eines Fahrzeugs mit einer Vorrichtung zur Scheibenenteisung gemäß einem zweiten Ausführungsbeispiel.

Ein Kraftfahrzeug 1 weist ein Belüftungs- und Klimatisierungssystem 2 zur Belüftung und Temperierung des Fahrzeuginnenraums 3 auf. Teil des Belüftungs- und Klimatisierungssystems 2 ist ein Gebläse 4, über welches Frischluft aus der Umgebung und Umluft aus dem Fahrzeuginnenraum angesaugt werden kann, wobei in der Zeichnung auf eine Darstellung der Umluftansaugung verzichtet wurde. Die Frischluftansaugung des Gebläses 4 ist frontseitig unterhalb der Windschutzscheibe des Kraftfahrzeugs 1 angeordnet, wie durch einen Pfeil angedeutet.

Die vom Gebläse 4 angesaugte Luft (Frisch- und/oder Umluft) wird, wie durch Pfeile in der Zeichnung angedeutet, durch einen Filter (nicht dargestellt), einen Verdampfer (nicht dargestellt) und anschließend auf einem Warmluftpfad durch einen motorkühlmittelbeheizten Heizer 5 und elektrischen Heizer 6 oder auf einem Kaltluftpfad oder Kaftluftbypass 7 vorbei am Heizer 5 und elektrischen Heizer 6 in einen Mischraum 8 geleitet. Vom Mischraum 8 aus erfolgt mittels einzelner Klappen geregelt eine Verteilung der temperierten Luft auf die einzelnen Luftkanäle zum Defrost-Auslass im Innenraum (innerer Defrost-Luftkanal 9), zur Frontbelüftung (Belüftungs-Luftkanal 10), zum Front-Fußraum (Fußraum-Luftkanal 11) sowie in den Fondbereich (nicht dargestellt). Zusätzlich ist ein durch eine erste, im Bereich des Mischraums 8 angeordnete Klappe 12 geregelter äußerer Defrost-Luftkanal 13 vorgesehen, welcher benachbart zum inneren Defrost-Luftkanal 9 beginnt und außerhalb des Fahrzeugs unter der Windschutzscheibe endet, wobei vorliegend die Austrittsöffnung des äußeren Defrost-Luftkanals 9 zwischen der Windschutzscheibe und einer Eintrittsöffnung 14 für die Frischluftansaugung des Gebläses 4 angeordnet ist.

Ist die Windschutzscheibe von außen her stark vereist, so wird - entsprechend der Ausstattung des Kraftfahrzeugs 1 automatisch oder fahrergeregelt - beim Starten des kalten Kraftfahrzeugs 1 der elektrische Heizer 6 mit maximaler Leistung betrieben, die vom Gebläse 4 angesaugte Luft wird zu 100% durch den Warmluftpfad, d.h. den sich langsam erwärmenden Heizer 5 und den sich schnell erwärmenden elektrischen Heizer 6, geleitet und durch die geöffnete Klappe 12 in den äußeren Defrost-Luftkanal 13 geleitet, so dass innerhalb kürzester Zeit warme Luft zur Windschutzscheibe gelangt und dieselbe enteist wird. Die Ansaugung der Luft erfolgt vorliegend von außen.

Obwohl in der Zeichnung nicht dargestellt, kann auch vom Gebläse 4 aus dem Fahrzeuginnenraum 3 angesaugte Luft zum Enteisen der Windschutzscheibe verwendet werden. Dies ist insbesondere dann sinnvoll, wenn die Luft im Fahrzeuginnenraum wärmer als die Luft außerhalb des Fahrzeugs ist, oder wenn bspw. wegen einer starken Schnee- oder Eisschicht nicht ausreichend Luft aus der Umgebung angesaugt werden kann.

Bei Bedarf oder automatisiert geregelt, bspw. zeitversetzt oder temperaturabhängig, wird auch warme Luft durch den inneren Defrost-luftkanal 9 von innen her an die Windschutzscheibe geleitet, so dass ein sich innen ausbildender Beschlag ebenfalls von der Windschutzscheibe entfernt wird.

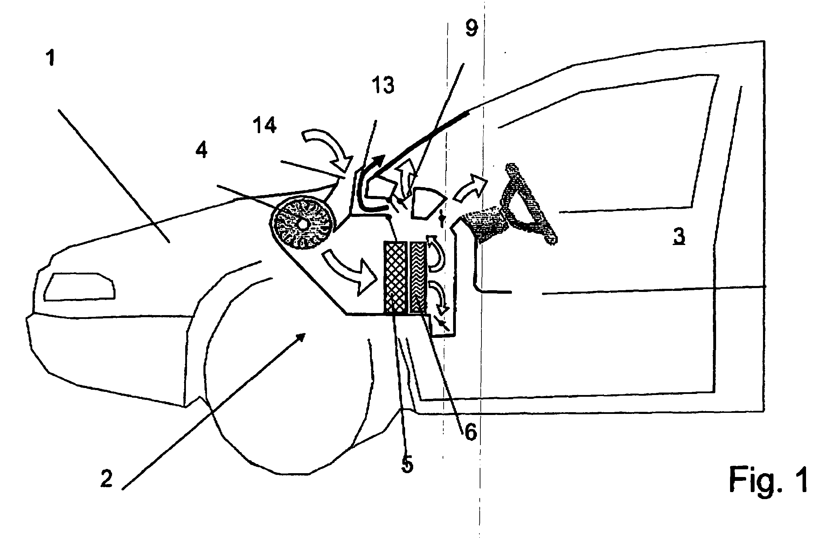

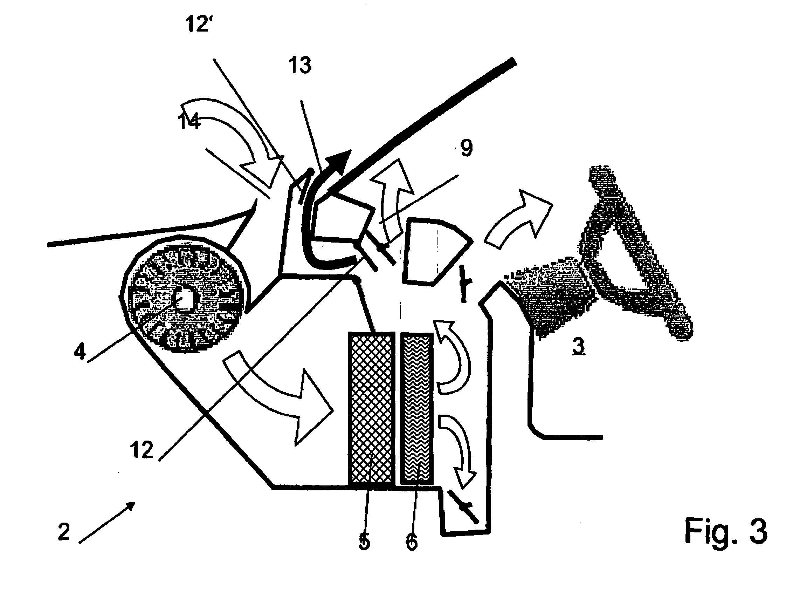

Gemäß einer In Fig. 3 dargestellten Variante, welche - sowohl nachfolgend nicht beschrieben - der der Fig.1 entspricht, und bei der in der Beschreibung und Zeichnung für einander entsprechende Bauteile auch die gleichen Bezugszeichen wie bei Fig.1 verwendet sind, ist am Ende des äußeren Defrost-Luftkanals 13 eine zweite Klappe 12' angeordnet, welche den äußeren Defrost-Luftkanal 13 von außen her abschließt, wenn keine Luft durch denselben zum Enteisen der Windschutzscheibe strömt. Die Regelung kann erfolgen, wie für Fig.1 beschrieben, wobei die Klappen 12 und 12' einander entsprechend geöffnet und geschlossen werden.

Gemäß einer weiteren, nicht in der Zeichnung dargestellten Variante, welche im Wesentlichen der zuvor beschriebenen ersten Variante entspricht, entfällt die in der Nähe des Mischraums angeordnete Klappe und dir Regelung erfolgt ausschließlich über die Klappe am Ende des Defrost-Luftkanals.

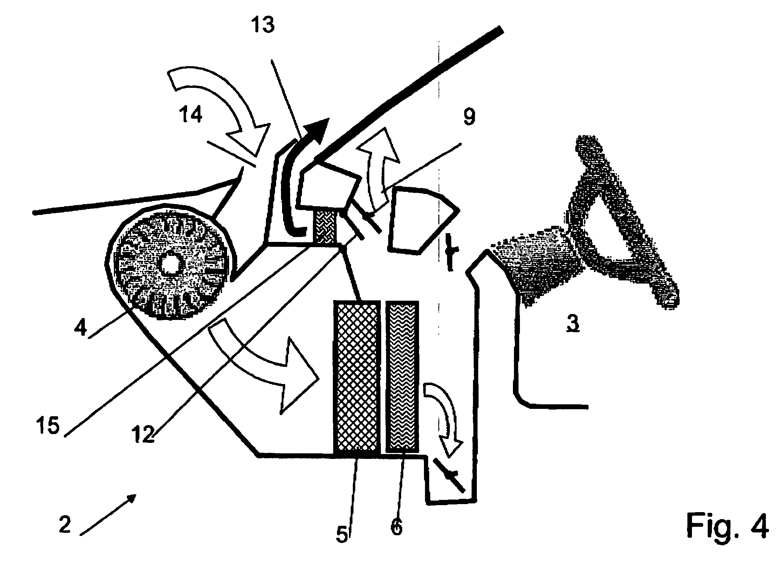

Fig. 4 zeigt eine zweite Vorrichtung zur Scheibenenteisung, welche - soweit nachfolgend nicht beschrieben - der ersten Vorrichtung entspricht und bei der in der Beschreibung und Zeichnung für einander entsprechende Bauteile auch die gleichen Bezugszeichen wie bei der ersten Vorrichtung verwendet sind. Im Unterschied zur ersten Vorrichtung ist im äußeren Defrost-Luftkanal 13 ein zusätzlicher Defrost Heizer 15 benachbart der mischraumseitigen Klappe 12 im Anfangsbereich des äußeren Defrost-Luftkanals 13 vorgesehen, welcher vorliegend durch PTC-Elemente gebildet ist. Dieser Defrost-Heizer 15 beschleunigt die Erwärmung der durchströmenden und der Windschutzscheibe zuzuführenden Luft und erhöht zudem deren Temperatur, so dass innerhalb kurzer Zeit die Windschutzscheibe eisfrei ist. Die Regelung des Defrost-Heizers 15 kann in Abhängigkeit der Klappenstellung der Klappe 12 am Eintritt des äußeren Defrost-Luftkanals 13 erfolgen.

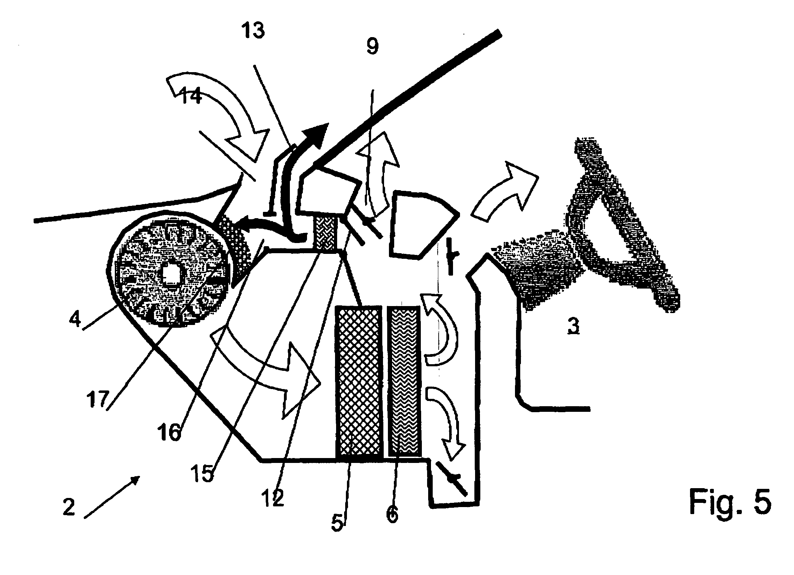

Die in Fig. 5 dargestellte Vorrichtung zur Scheibenenteisung gemäß dem ersten Ausführungsbeispiel entspricht - soweit nachfolgend nicht beschrieben - der zweiten Vorrichtung und in der Beschreibung und Zeichnung sind für einander entsprechende Bauteile auch die gleichen Bezugszeichen wie bei den zuvor beschriebenen Vorrichtungen verwendet. Hierbei ist gemäß dem ersten Ausführungsbeispiel ein zusätzlicher Defrost-Heizer 15 im Anfangsbereich des äußeren Defrost-Luftkanals 13 vorgesehen. Im Unterschied zur zuvor beschriebenen zweiten Vorrichtung ist jedoch nach dem Defrost-Heizer 15 eine Verzweigung vorgesehen, an welcher ein Luftkanal 16 abzweigt, welcher hinter der Frischluftansaugungs-Eintrittsöffnung 14 und vor einem Filter 17 der Frischluftansaugung zugeführt ist. Dies ermöglicht ein Enteisen des Filters 17, so dass innerhalb kurzer Zeit Frischluft vom Gebläse 4 angesaugt werden kann. Ferner kann bei starkem Schneefall ein Ansammeln von Schnee am Filter 17 wirksam verhindert werden.

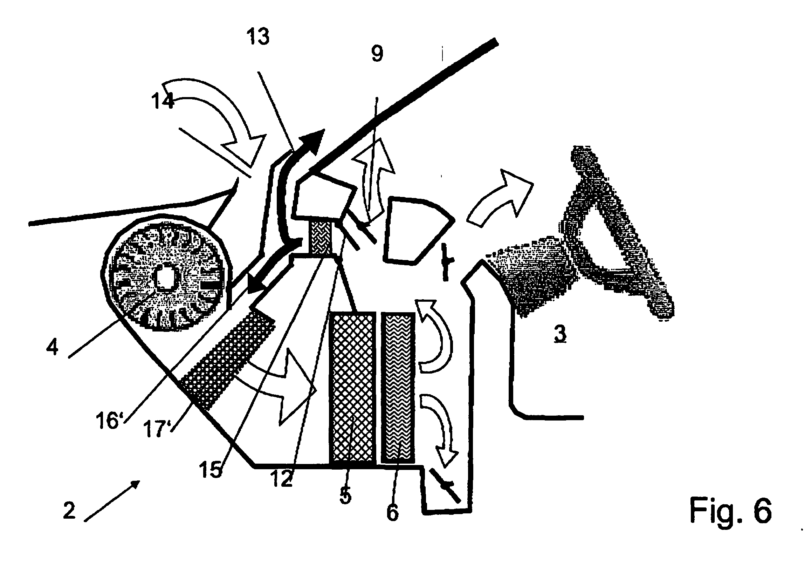

Fig. 6 zeigt eine Vorrichtung zur Scheibenenteisung gemäß dem zweiten Ausführungsbeispiel, welche soweit nachfolgend nicht beschrieben dem ersten Ausführungsbeispiel entspricht und bei dem in der Beschreibung und Zeichnung für einander entsprechende Bauteile auch die gleichen Bezugszeichen wie bei den vorigen Vorrichtungen verwendet sind. Hierbei ist wiederum ein zusätzlicher Defrost-Heizer 15 im Anfangsbereich des äußeren Defrost-Luftkanals 13 vorgesehen. Ferner ist nach dem Defrost-Heizer 15 wiederum eine Verzweigung vorgesehen, an welcher ein Luftkanal 16' abzweigt, welcher jedoch im Unterschied zum ersten Ausführungsbeispiel hinter dem Gebläse 4 und vor einem Filter 17' dem Luftkanal zugeführt ist, welche vom Gebläse 4 die Luft in Richtung Verdampfer und ggf. motorkühlmittelbeheizten Heizer 5 und elektrischen Heizer 6 führt. Dies ermöglicht entsprechend dem ersten Ausführungsbeispiel ein Enteisen des Filters 17'.

Obwohl vorstehend nicht ausdrücklich erwähnt, kann es sich beim Belüftungs- und Klimatisierungssystem auch um ein System ohne Kühlung, d.h. ohne Verdampfer, handeln, da ausschließlich eine Heizfunktion des Systems für die Enteisung der Windschutzscheibe relevant ist.

## Patentansprüche

1. Vorrichtung zur Scheibenenteisung für ein Fahrzeug mit einem Fahrzeuginnenraum (3) und einer Außenseite des Fahrzeugs, aufweisend ein Gebläse (4) mit mindestens einem Ansaugluftkanal über den Luft von der Außenseite des Fahrzeugs ansaugbar ist, mindestens einen Heizer (5, 6, 15), welcher zur Erwärmung der dem Fahrzeuginnenraum (3) zuzuführenden Luft dient, und mindestens einem inneren Defrost-Luftkanal (9), durch weichen vom Gebläse (4) angesaugte Luft innenraumseitig in Richtung Scheibe blasbar ist, wobei neben dem Ansaugluflkanal des Gebläses (4) und dem inneren Defrost-Luftkanal (9), der innenraumseitig und in der Nähe einer Seite der Scheibe endet, ein äußerer Defrost-Luftkanal (13) vorgesehen ist, der auf der Außenseite des Fahrzeugs in der Nähe einer Seite der Scheibe endet **dadurch gekennzeichnet, dass** ein Abzweig des äußeren Defrost-Luftkanals (13) luftanströmseitig und/oder luftabströmseitig des Gebläses (4) in den Luftkanal einmündet, über welchen Luft dem Bereich eines Belüftungs- und Klimatisierungssystems (2) zuführbar ist, der dem Temperieren der dem Fahrzeuginnenraum zuführenden Luft dient.

2. Vorrichtung nach Anspruch 1, **dadurch gekennzeichnet, dass** neben einem als Kühler für ein Fühlmittel, insbesondere das Motor-Kühlmittel, dienenden Heizer (5) mindestens ein elektrischer Heizer (6, 15) vorgesehen ist.

3. Vorrichtung nach Anspruch 2, **dadurch gekennzeichnet, dass** der elektrische Heizer (6, 15) mindestens ein PTC-Element aufweist.

4. Vorrichtung nach Anspruch 2 oder 3, **dadurch gekennzeichnet, dass** der elektrische Heizer (6, 15) eine Leistung von mindestens 3000 W aufweist.

5. Vorrichtung nach einem der vorhergehenden Ansprüche, **dadurch gekennzeichnet, dass** im äußeren Defrost-Luftkanal (13) ein Defrost-Heizer (16), insbesondere ein elektrischer Heizer, angeordnet ist.

6. Vorrichtung nach einem der vorhergehenden Ansprüche, **dadurch gekennzeichnet, dass** Luft vom äußeren Defräst-Luftkanal (13) zu einem Filter (17, 17') leitbar ist, welcher luftanströmseitig und/oder luftabströmseitig des Gebläses (4) angeordnet ist.

7. Vorrichtung nach einem der vorhergehenden Ansprüche, **dadurch gekennzeichnet, dass** der innere Defrost-Luftkanal (9) und der äußere Defrost-Luftkanal (13) auf der gleichen Seite der Scheibe enden.

8. Vorrichtung nach einem der vorhergehenden Ansprüche, **dadurch gekennzeichnet, dass** eine Austrittsöffnung des äußeren Defrost-Luftkanals (9) zwischen der Scheibe und einer Eintrittsöffnung (14) für die Frischluftansaugung des Gebläses (4) angeordnet ist.

9. Fahrzeug, insbesondere Kraftfahrzeug, **gekennzeichnet durch** eine Vorrichtung zur Scheibenenteisung gemäß einem der vorhergehenden Ansprüche.

## Claims

1. A device for windshield deicing for a vehicle having a vehicle interior (3) and an outer side of the vehicle, comprising a blower (4) having at least one air intake duct, through which air can be drawn in from the outside of the vehicle, at least one heating element (5, 6, 15) which is used to heat the air to be supplied to the vehicle interior (3), and at least one inner defrost air duct (9), through which air drawn in by the blower (4) can be blown in the interior space in the direction of the windshield, wherein, in addition to the intake air duct of the blower (4) and the inner defrost air duct (9) which terminates in the interior space and in the vicinity of one side of the windshield, an outer defrost air duct (13) is provided, which terminates on the outside of the vehicle in the vicinity of one side of the windshield,
**characterized in that** a branch of the outer defrost air duct (13) leads into the air duct on the air inflow side and/or the air outflow side of the blower (4), via which air can be supplied to the region of a ventilation and air conditioning system (2) which holds the air to be supplied to the vehicle interior at a constant temperature.

2. The device according to claim 1, **characterized in that** a heating element (5), which is used as a radiator for a coolant, in particular the engine coolant, as well as at least one electric heating element (6, 15) are provided.

3. The device according to claim 2, **characterized in that** the electric heater (6, 15) has at least one PTC element.

4. The device according to claim 2 or 3, **characterized in that** the electric heater (6, 15) has a power of at least 3000 W.

5. The device according to one of the preceding claims, **characterized in that** a defrost heating element (16), in particular an electric heating element, is disposed in the outer defrost duct (13).

6. The device according to one of the preceding claims, **characterized in that** air from the outer defrost air duct (13) can be directed to a filter (17, 17') which is disposed on the air inflow side and/or air outflow side of the blower (4).

7. The device according to one of the preceding claims, **characterized in that** the inner defrost air duct (9) and the outer defrost air duct (13) terminate on the same side of the windshield.

8. The device according to one of the preceding claims, **characterized in that** an outlet opening of the outer defrost air duct (9) is disposed between the windshield and an inlet opening (14) for the fresh air intake of the blower (4).

9. A vehicle, in particular a motor vehicle, **characterized by** a device for windshield deicing according to one of the preceding claims.

## Revendications

1. Dispositif de dégivrage d'un pare-brise concernant un véhicule comprenant un habitacle (3) et un côté extérieur du véhicule, ledit dispositif comportant une soufflante (4) comprenant au moins un conduit d'air d'aspiration par lequel peut être aspiré de l'air provenant du côté extérieur du véhicule, au moins un dispositif de chauffage (5, 6, 15) qui sert au chauffage de l'air à fournir à l'habitacle (3) du véhicule, et au moins un conduit d'air de dégivrage intérieur (9) par lequel peut être soufflé en direction du pare-brise l'air aspiré par la soufflante (4), côté habitacle, où, en plus du conduit d'air d'aspiration de la soufflante (4) et du conduit d'air de dégivrage intérieur (9) qui se termine côté habitacle et à proximité d'un côté du pare-brise, il est prévu un conduit d'air de dégivrage extérieur (13) qui se termine à proximité d'un côté du pare-brise, sur le côté extérieur du véhicule,
**caractérisé en ce qu'**une bifurcation du conduit d'air de dégivrage extérieur (13) débouche dans le conduit d'air, côté entrée d'air et / ou côté sortie d'air de la soufflante (4), bifurcation par laquelle de l'air peut être fourni à la zone d'un système de ventilation et de climatisation (2), bifurcation qui sert à tempérer l'air à fournir à l'habitacle du véhicule.

2. Dispositif selon la revendication 1, **caractérisé en ce qu'**il est prévu au moins un dispositif de chauffage électrique (6, 15), en plus d'un dispositif de chauffage (5) servant de radiateur pour un liquide de refroidissement, en particulier le liquide de refroidissement du moteur.

3. Dispositif selon la revendication 2, **caractérisé en ce que** le dispositif de chauffage électrique (6, 15) présente au moins un élément à coefficient de température positif (CTP).

4. Dispositif selon la revendication 2 ou 3, **caractérisé en ce que** le dispositif de chauffage électrique (6, 15) présente une puissance d'au moins 3000 W.

5. Dispositif selon l'une quelconque des revendications précédentes, **caractérisé en ce qu'**un dispositif de chauffage (16) servant au dégivrage, en particulier un dispositif de chauffage électrique, est disposé dans le conduit d'air de dégivrage extérieur (13).

6. Dispositif selon l'une quelconque des revendications précédentes, **caractérisé en ce que** de l'air provenant du conduit d'air de dégivrage extérieur (13) peut être dirigé vers un filtre (17, 17') qui est disposé côté entrée d'air et / ou côté sortie d'air de la soufflante (4).

7. Dispositif selon l'une quelconque des revendications précédentes, **caractérisé en ce que** le conduit d'air de dégivrage intérieur (9) et le conduit d'air de dégivrage extérieur (13) se terminent sur le même côté du pare-brise.

8. Dispositif selon l'une quelconque des revendications précédentes, **caractérisé en ce qu'**une ouverture de sortie du conduit d'air de dégivrage extérieur (13) est disposée entre le pare-brise et une ouverture d'entrée (14) prévue pour l'aspiration de l'air frais de la soufflante (4).

9. Véhicule, en particulier véhicule automobile, **caractérisé par** un dispositif de dégivrage de pare-brise selon l'une quelconque des revendications précédentes.
